Europäisches Patentamt

European Patent Office

Office européen des brevets

(11) Veröffentlichungsnummer: **0 423 448 A1**

## (12) EUROPÄISCHE PATENTANMELDUNG

(21) Anmeldenummer: 90115052.4

(22) Anmeldetag: 06.08.90

(51) Int. Cl.5: **H01M 8/02**, //B32B15/01

(30) Priorität: 20.09.89 CH 3424/89

(43) Veröffentlichungstag der Anmeldung:
**24.04.91 Patentblatt 91/17**

(84) Benannte Vertragsstaaten:
**CH DE FR GB IT LI NL SE**

(71) Anmelder: **ASEA BROWN BOVERI AG**

**CH-5401 Baden(CH)**

(72) Erfinder: **Nazmy, Mohamed, Dr.**
**Zelglistrasse 30**
**CH-5442 Fislisbach(CH)**

(54) **Stromkollektor zur Stromleitung zwischen stapelförmig angeordneten Hochtemperatur-Brennstoffzellen und Verfahren zu dessen Herstellung.**

(57) Stromkollektor zur Stromleitung zwischen benachbarten ebenen, stapelförmig angeordneten Hochtemperatur-Brennstoffzellen mit Feststoffelektrolyt aus einem die geometrische Form bestimmenden Träger (1) aus einer oxydationsbeständigen, oxyddispersionsgehärteten Nickelbasis-Superlegierung mit $\geq 20$ % Cr und $\leq 0,5$ % Al und $\leq 0,8$ % Ti, einer elektrisch leitenden $Cr_2O_3$-Zwischenschicht (3) oder Füllschicht (9) und einer auf letzterer aufliegenden oder in ihr eingelagerten Edelmetall-Oberflächenschicht (2; 7; 8). Varianten mit zusammenhängender (2) oder aus diskreten, in $Cr_2O_3$-Matrix eingebetteten Partikeln (7) oder als eingebettetes Gerüst (8) vorliegender Edelmetall-Oberflächenschicht aus Au, einem Pt-Metall oder Legierungen.

FIG.1

FIG.3

EP 0 423 448 A1

# STROMKOLLEKTOR ZUR STROMLEITUNG ZWISCHEN STAPELFÖRMIG ANGEORDNETEN HOCHTEMPERATUR-BRENNSTOFFZELLEN UND VERFAHREN ZU DESSEN HERSTELLUNG

## Technisches Gebiet

Hochtemperatur-Brennstoffzellen zur Umwandlung von chemischer Energie in elektrische Energie. Die elektrochemische Energieumwandlung und die hierzu benötigten Vorrichtungen gewinnen dank ihres guten Wirkungsgrades gegenüber anderen Umwandlungsarten an Bedeutung.

Die Erfindung bezieht sich auf die Weiterentwicklung der elektrochemischen Hochtemperatur-Zellen unter Verwendung von keramischen Feststoffelektrolyten als Ionenleiter, wobei die Zellen weitgehend unabhängig vom verwendeten Brennstoff sein sollen und eine raumsparende Anordnung gewähren sollen.

Im engeren Sinne betrifft sie einen Stromkollektor zur Stromleitung zwischen benachbarten flachen, ebenen, stapelförmig angeordneten keramischen Hochtemperatur-Brennstoff zellen mit Feststoffelektrolyt auf der Basis von dotiertem, stabilisertem Zirkonoxyd, wobei jeweils die Sauerstoffelektrode der einen Brennstoffzelle mit der Brennstoffelektrode der nächstfolgenden Brennstoffzelle elektrisch leitend verbunden und der zwischen den Elektroden liegende Zwischenraum durch eine gasdichte, elektrisch leitende Trennplatte in zwei, die unterschiedlichen gasförmigen Medien Brennstoff und Sauerstoffträger führenden Räume unterteilt ist.

Ferner betrifft die Erfindung ein Verfahren zur Herstellung eines Stromkollektors.

## Stand der Technik

Hochtemperatur-Brennstoffzellen mit keramischem Feststoffelektrolyten sind aus zahlreichen Veröffentlichungen bekannt. Die eigentlichen Elemente für derartige Zellen können die verschiedensten Formen und Abmessungen aufweisen. Um die ohmschen Spannungsverluste klein zu halten, wird allenthalben versucht, die Dicke der Elektrolytschicht möglichst niedrig zu halten. Form und Abmessungen der Elemente richten sich zudem nach der Forderung der Möglichkeit der elektrischen Serieschaltung einer Vielzahl von Zellen, um auf die nötige Klemmenspannung zu kommen und die Ströme vergleichsweise niedrig zu halten.

Im Falle einer stapelförmigen Anordnung einer Vielzahl von plattenförmigen ebenen Brennstoffzellen ähnlich dem Filterpresse-Prinzip muss der Strom senkrecht zur Plattenebene von der Sauerstoffelektrode der einen Zelle zur Brennstoffelektrode der nächstfolgenden Zelle geleitet werden. Als wesentliche Bauelemente sind für diese Funktion elektrische Verbindungsglieder zu den Elektroden (Stromkollektoren) und Trennplatten (Bipolarplatten) erforderlich.

Die bisher bekannten Bauelemente befriedigen vielfach bezüglich der verwendeten Werkstoffe, der Konstruktion und Fabrikation sowie dem Langzeitverhalten den modernen Anforderungen nicht.

Die bekannten, für Brennstoffzellen verwendeten Grundelemente zeichnen sich meistens durch eine vergleichsweise komplizierte Geometrie aus, die den Bau von kompakten, raumsparenden Anlagen erschwert. Insbesondere fehlt eine für eine optimale Serieschaltung der Einzelzellen brauchbare Konfiguration, die sich mit einfachen Fabrikationsmitteln realisieren lässt.

Es besteht daher ein grosses Bedürfnis nach Weiterentwicklung, Vereinfachung und Rationalisierung des Aufbaus und der Herstellung von stromführenden Grund-Bauelementen und deren optimale gegenseitige Anordnung basierend auf keramischen Hochtemperatur-Brennstoffzellen.

Zum Stand der Technik werden die nachfolgenden Druckschriften genannt:
- 0.Antonsen, W.Baukal und W.Fischer, "HochtemperaturBrennstoffbatterie mit keramischem Elektrolyten", Brown Boveri Mitteilungen Januar/Februar 1966, Seiten - 21 - 30,
- US-A-4 692 274
- US-A-4 395 468
- W.J.Dollard und W.G.Parker, "An overview of the Westinghouse Electric Corporation solid oxide fuel cell program", Extended Abstracts, Fuel Cell Techno logy and Applaications, International Seminar, Den Haag, Niederlande, 26. bis 29. Oktober 1987,
- F.J.Rohr, High-Temperature Fuel Cells, Solid Electrolytes, 1978 by Academic Press, Inc., Seite 431 ff.
- D.C.Fee et al., Monolithic fuel Cell Development, Argonne National Laboratory, Paper presented at the 1986 Fuel Cell Seminat, Oct. 26-29, 1986 Tucson, AZ, U.S. Department of Energy, The University of Chicago.

## Darstellung der Erfindung

Der Erfindung liegt die Aufgabe zugrunde, einen Stromkollektor zur Stromleitung zwischen benachbarten ebenen, stapelförmig angeordneten keramischen Brennstoffzellen sowie ein Verfahren zu dessen Herstellung anzugeben, welcher einerseits einen guten elektrischen Kontakt sowohl zu den Elektroden der Brennstoffzelle wie zu den übrigen Bauteilen bei Temperaturen bis zu 900 °C gewährleistet, seinerseits eine hohe metallische elektrische Leitfähigkeit besitzt und sowohl in reduzierender, neutraler wie in oxydierender Atmosphäre ohne nachteilige Veränderungen durch Materialwanderungen wie Diffusions- oder andere Migrationsvorgänge oder Materialverluste durch Abdampfen etc. eingesetzt werden kann und eine hohe Langzeitstabilität aufweist. Der Stromkollektor soll kostengünstig, reproduzierbar und auswechselbar hergestellt werden können.

Diese Aufgabe wird dadurch gelöst, dass der eingangs erwähnte Stromkollektor aus einem die geometrische Form bestimmenden Träger aus einer elektrisch leitenden oxydationsbeständigen, oxyddispersionsgehärteten Nickelbasis-Superlegierung mit einem hohen Cr-Gehalt und sehr niedrigem Al- und Ti-Gehalt, wobei folgende Zusammensetzungsgrenzen einzuhalten sind:

$Cr \geq 20$ Gew.-%
$C \leq 0,1$ Gew.-%
$Al \leq 0,5$ Gew.-%
$Ti \leq 0,8$ Gew.-%,

ferner aus einer nur an den Kontaktstellen vorhandenen porösen oder dichten Oberflächenschicht aus einem Edelmetall ausgewählt aus Au oder einem Pt-Metall oder einer Legierung aus mindestens zweien dieser Metalle und einer zusammenhängenden oder nicht zusammenhängenden zwischen Träger und Oberflächenschicht vorliegenden Zwischenschicht und/oder die Poren der Oberflächenschicht ausfüllenden Füllschicht aus elektrisch halbleitendem, gleichzeitig als Oxydationsschutz und als Diffusionssperre wirkenden $Cr_2O_3$ besteht, dergestalt, dass die $Cr_2O_3$-Partikel fest sowohl mit dem Trägerwerkstoff wie mit den Edelmetall-Partikeln als auch unter sich elektrisch leitend verbunden sind.

Die Aufgabe wird ferner dadurch gelöst, dass zur Herstellung eines Stromkollektors zunächst aus der oxyddispersionsgehärteten Nickelbasis-Superlegierung durch thermo-mechanische Behandlung oder mechanische Bearbeitung aus geeignetem Vormaterial in Form von Blech oder Draht ein Träger gefertigt und die Kontaktstellen durch Bepinseln, Bestreichen, Abrollen eines getränkten Filzes oder teilweises Eintauchen mit einer Paste oder Suspension von Edelmetallpulver in Binde- und Lösungsmittel oberflächlich beschichtet und das Ganze getrocknet und einem Sinterprozess bei 0,7 - 0,8 der absoluten Schmelztemperatur des Edelmetalls in inerter Atmosphäre oder Vakuum unterworfen und an schliessend bei 800 bis 1100 °C in oxydierender Atmosphäre während mindestens 24 h geglüht wird.

## Weg zur Ausführung der Erfindung

Die Erfindung wird anhand der nachfolgenden, durch Figuren näher erläuterten Ausführungsbeispiele beschrieben.

Dabei zeigt:

Fig. 1 einen schematischen Aufriss/Längsschnitt durch einen Abschnitt eines Stromkollektors mit zusammenhängender Edelmetall-Oberflächenschicht und $Cr_2O_3$-Zwischenschicht,

Fig. 2 einen schematischen Aufriss/Längsschnitt durch einen Abschnitt eines Stromkollektors mit nicht zusammenhängender Edelmetall-Oberflächenschicht und $Cr_2O_3$-Zwischenschicht,

Fig. 3 einen schematischen Aufriss/Längsschnitt durch einen Abschnitt eines Stromkollektors mit lockerer Edelmetall-Oberflächenschicht und einbettender $Cr_2O_3$-Füllschicht.

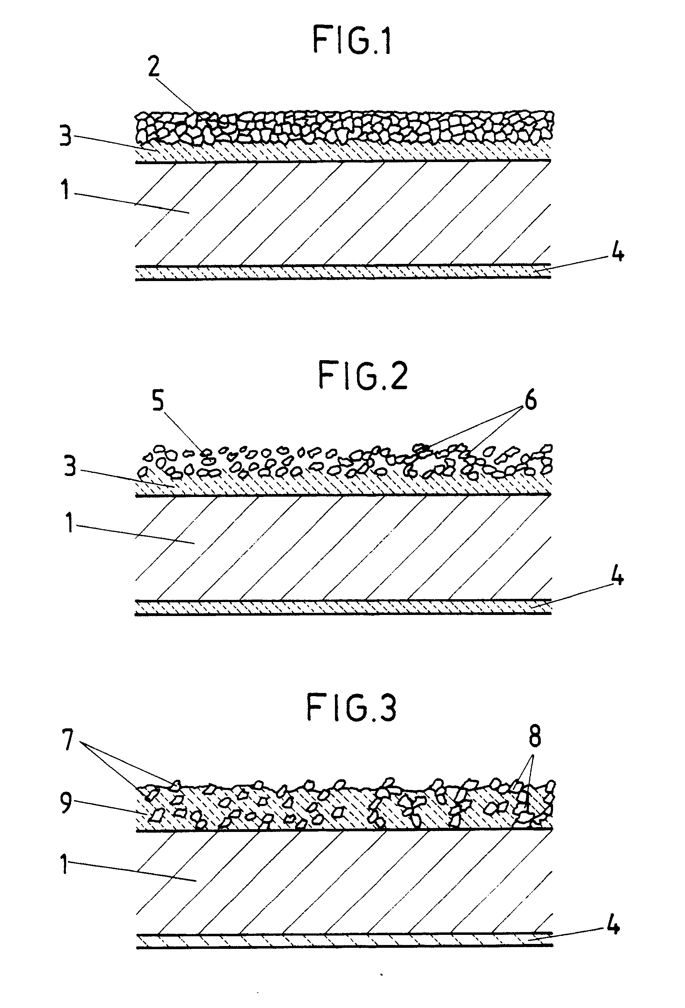

In Fig. 1 ist ein schematischer Aufriss/Längsschnitt durch einen Abschnitt eines Stromkollektors mit zusammenhängender Edelmetall-Oberflächenschicht und $Cr_2O_3$-Zwischenschicht dargestellt. 1 ist der die Gestalt des Stromkollektors bestimmende Träger in Form eines Grundkörpers aus einer warmfesten dispersionsgehärteten Ni/Cr-Legierung mit niedrigem Al-, Ti- und Si-Gehalt. 2 ist eine annähernd zusammenhängende, mehr oder weniger dichte Edelmetall-Oberflächenschicht, zum Beispiel aus Pt bestehend. 3 stellt eine zusammenhänge Zwischenschicht aus elektrisch leitendem $Cr_2O_3$ (Halbleiter) dar. Sowohl die Schicht 2 wie der Träger 1 ist mit der Schicht 3 fest verankert. 4 ist die rückseitige Deckschicht aus $Cr_2O_3$.

Fig. 2 bezieht sich auf einen schematischen Aufriss/Längsschnitt durch einen Abschnitt eines Stromkollektors mit nicht zusammenhängender Edelmetall-Oberflächenschicht und $Cr_2O_3$-Zwischenschicht. 1 ist der die Gestalt bestimmende Träger aus einer warmfesten dispersionsgehärteten, Al-, Ti- und Si-armen Ni/Cr-Legierung. 3 stellt die zusammenhängende Zwischenschicht aus leitendem $Cr_2O_3$ dar. In der linken Hälfte der Figur ist mit dem Bezugszeichen 5 eine poröse Edelmetall-Oberflächenschicht (Pt) bezeichnet, die im wesentlichen aus losen und nur oberflächlich zusammenhängenden Partikeln besteht. Die rechte Hälfte der Figur zeigt eine poröse Edelmetall-Oberflächenschicht in Form eines lockeren Gerüstes von zusammengekitteten (zusammengesinterten) Partikeln. 4 ist wieder die rückseitige $Cr_2O_3$-Deckschicht.

Fig. 3 zeigt einen schematischen Aufriss/Längsschnitt durch einen Abschnitt eines Stromkollektors mit lockerer Edelmetall-Oberflächenschicht und einbettender $Cr_2O_3$-Füllschicht. Die Bezugszeichen 1 und 4 entsprechen genau denjenigen der Figuren 1 und 2. In der linken Hälfte der Figur ist eine aus diskreten unzusammenhängenden Partikeln bestehende Edelmetall-Oberflächenschicht 7, dargestellt, wobei die Partikel in die mehr oder weniger zusammenhängende Füllschicht 9 aus leitendem $Cr_2O_3$ eingebettet sind. Diese Füllschicht 9 aus mit dem Träger 1 fest verbundenem $Cr_2O_3$ dient also gewissermassen als Einbettungsmatrix für die Edelmetallpartikel, die zum Teil indessen leicht vorkragen. Die rechte Hälfte der Figur zeigt die gleiche Füllschicht 9 als Einbettungsmatrix, die die Edelmetall-Oberflächenschicht 8, bestehend aus einem lockeren Gerüst von Partikeln (Pt) durchdringt. Das aus verschweissten (versinterten) Partikeln eines Edelmetalls bestehende offenporige, lockere Gerüst ist somit in der Füllschicht 9 vollständig eingebettet. Einzelne Spitzen der Edelmetall-Partikel ragen indessen stets über die Oberfläche der Einbettungsmatrix hinaus.

Ausführungsbeispiel 1:

Siehe Fig. 1!
Aus einer oxyddispersionsgehärteten Nickelbasis-Superlegierung wurde ein Träger 1 für einen Stromkollektor in Form eines gewellten, dünnen Bandes hergestellt.
Das Band hatte folgende Abmessungen:
Dicke = 0,15 mm
Breite = 2 mm
Wellenlänge = 6 mm
Amplitude = 2,5 mm

Die Legierung hatte die Handelsbezeichnung MA 754 (INCO) und wies folgende Zusammensetzung auf:
Cr = 20 Gew.-%
Al = 0,3 Gew.-%
Ti = 0,5 Gew.-%
Fe = 1 Gew.-%
C = 0,05 Gew.-%
$Y_2O_3$ = 0,6 Gew.-%
Ni = Rest
Das Band wurde in der feinkörnigen Kristallstruktur angeliefert, bei ca. 1000° C warmgewalzt, gestanzt, in Wellenform gepresst und bei 1280° C während 1 h isotherm rekristallisiert. Dadurch erhielt es seine hervorragende Warmfestigkeit vor allem gegenüber Biegung quer zur Längsrichtung. Die Scheitel der Wellen des Bandes wurden mit einer dünnen Schicht einer Paste bestrichen, die Pt-Pulver mit einer Partikelgrösse von max. 3 μm enthielt (Aufschlämmung von Pt-Pulver in Lösungsmittel mit organischem Binder). Der an den Scheitelpunkten der Welle mit Pt beschichtete Träger 1 wurde während 1 h bei 300° C getrocknet und dann bei 950° C während 24 h in oxydierender Atmosphäre geglüht. Dann wurde eine zusammenhängende Pt-Schicht von ca. 15 μm Dicke zusätzlich galvanisch auf die Pt-Punkte aufgetragen. Das Ganze wurde 48 h in $O_2$-Atmosphäre bei 1000° C geglüht und hernach abgekühlt. Das metallographische Schliffbild zeigte eine zusammenhängende Pt-Oberflächenschicht 2 von ca. 20 μm Dicke. Darunter, direkt mit dem Träger 1 fest verbunden, hatte sich eine ca. 5 μm dicke Zwischenschicht 3 aus leitendem $Cr_2O_3$ (Halbleiter) gebildet, in der die Oberflächenschicht 2 fest verankert war.

Es soll hier speziell auf die hervorragende Bedeutung der elektrisch leitenden $Cr_2O_3$-Zwischenschicht 3 im Zusammenhang mit der erfindungsgemässen Schichtfolge hingewiesen werden. Die Zwischenschicht 3 hat unter anderem im wesentlichen 3 Funktionen:
- Schutz des Trägers 1 aus dispersionsgehärteter Hochtemperaturlegierung vor vorzeitiger weiterer Oxydation.
- Grossflächige niederohmige Stromübertragung zwischen Träger 1 und Edelmetall-Oberflächenschicht 2.
- Diffusionssperre gegen Abwanderung des Edelmetalls in den Träger (Verarmung der Oberflächenschicht 2) und gegen Wanderung der Trägermetalle (Ni; Cr) in das Edelmetall (Verdünnung und Zerstörung der Oberflächenschicht 2 durch Herabsetzung der Nichtoxydierbarkeit).

Unter einem Strom von ca. 50 mA pro Berührungspunkt wurde in der Zwischenschicht 3 ein Spannungsabfall von ca. 2,5 mV gemessen. Dies entsprach einem Widerstand unterhalb des Pt-Beschichtungspunktes von ca. 50 mΩ. Am Berührungspunkt zwischen der ca. 2 mm² Fläche aufweisenden Oberflächenschicht 2 und einer grossflächigen Pt-Sonde als Gegenelektrode wurde ein Spannungsabfall von ca. 5 mV gemessen, was einem Uebergangswiderstand (Kontaktwiderstand) von ca. 100 mΩ entsprach. Diese Spannungsabfälle machten nur wenige Prozent der gesamten Zellenspannung einer Brennstoffzelle aus.

Ausführungsbeispiel 2:

Siehe Fig. 2., linke Seite!
Aus der Legierung MA 754 wurde ein Blech von 0,25 mm Dicke gewalzt und daraus ein Stromkollektor in Form einer Vielzahl von kammartig angeordneten Kontaktfingern gestanzt und gepresst. die Kontaktfinger hatten eine Breite von ca. 1,8 mm und eine Dicke von ca. 0,25 mm bei einer Länge von ca. 20 mm. Das Blechmaterial wurde bei ca. 1250° C rekristallisiert und kalt weiterverformt. Im übrigen wurde ähnlich Beispiel 1 vorgegangen. Als Paste wurde eine Aufschlämmung von Pd mit einer Korngrösse von max. 5 µm verwendet. Es wurden abwechslungsweise mehrere Lagen aufgebracht und dazwischen getrocknet. Dann wurde in O₂-Atmosphäre bei 1100 °C während 100 h geglüht. Das Schliffbild zeigte eine poröse Pd-Oberflächenschicht 5 von ca. 40 µm Dicke und eine elektrisch leitende Cr₂O₃-Zwischenschicht 3 von ca. 6 µm Dicke.

Die gemessenen Spannungsabfälle und Uebergangswiderstände bewegten sich in der gleichen Grössenordnung wie im Falle von Beispiel 1.


Ausführungsbeispiel 3:

Siehe Fig. 2, rechte Seite!
Aus einer versuchsweisen oxyddispersionsgehärteten Nickelbasis-Superlegierung wurde ein Träger 1 für einen Stromkollektor in Form eines Drahtwendels hergestellt. Der Drahtwendel hatte folgende Abmessungen:
Drahtdicke = 0,18 mm
Windungsdurchmesser = 3 mm
Steigung = 0,6 mm

Die Legierung hatte die nachfolgende Zusammensetzung:
Cr = 22 Gew.-%
Al = 0,2 Gew.-%
Ti = 0,2 Gew.-%
Fe = 5 Gew.-%
Co = 5 Gew.-%
C = 0,01 Gew.-%
Y₂O₃ = 1,2 Gew.-%
Ni = Rest
Das Ausgangsmaterial bestand aus einem stranggepressten feinkörnigen Stab, der sukzessive durch Warmwalzen und Ziehen mit Zwischenglühungen auf den Durchmesser von 0,18 mm gebracht wurde. Der Draht wurde zu einer Schraubenlinie gewunden und der zylindrische Wendel etwas flach gedrückt, so dass ein elliptischer Querschnitt entstand. Die grosse Achse mass 3,6 mm, die kleine Achse 2,4 mm. Der Wendel wurde hierauf bei 1260 °C rekristallisiert. Die flacheren, diametral gegenüberliegenden Seiten dieses Wendels mit schief zur Längsachse liegenden Windungen wurden nun nach dem Pastenverfahren mit einer vergleichsweise lockeren Schicht aus einer Au/Pd-Legierung belegt. Zu diesem Zweck wurde die Paste im Anlieferungszustand mit organischem Lösungsmittel verdünnt. Die Edelmetall-Legierung hatte die nachfolgende Zusammensetzung:
Au = 70 Gew.-%
Pd = 30 Gew.-%

Die Partikelgrösse betrug max. 5 µm. Die verdünnte Paste wurde zunächst bei 300 °C getrocknet und anschliessend unter O₂-Atmosphäre durch Glühen bei 1000 °C während 24 h in den metallischen Zustand übergeführt. Dabei wurde eine zusammenhängende Zwischenschicht 3 aus leitendem Cr₂O₃ und eine aus einem lockeren Gerüst von zusammengesinterten Partikeln bestehende Edelmetall-Oberflächenschicht 6 gebildet. Die Zwischenschicht 3 hatte eine Dicke von ca. 3 µm, die Oberflächenschicht 6 eine solche von ca. 25 µm.


Ausführungsbeispiel 4:

Siehe Fig. 3, linke Seite!
Aus einer versuchsweisen oxyddispersionsgehärteten Nickelbasis-Superlegierung wurde ein Träger 1 für einen Stromkollektor in Form eines Metallgewebes (Drahtgeflecht) hergestellt. Die Abmessungen waren wie folgt:
Drahtdurchmesser = 0,12 mm
Maschenweite = 0,8 mm

Die Legierung hatte die nachfolgende Zusammensetzung:
Cr = 25 Gew.-%
Al = 0,1 Gew.-%
Ti = 0,3 Gew.-%
Co = 15 Gew.-%
C = 0,03 Gew.-%
Y₂O₃ = 0,8 Gew.-%
Ni = Rest
Als Ausgangsmaterial wurde ein stranggepresster feinkörniger Stab verwendet, der zunächst durch Warmwalzen, Ziehen und Zwischenglühen zu einem Draht von 0,12 mm Durchmesser verarbeitet wurde. Aus dem Draht wurde ein Metallgewebe gefertigt und durch Pressen in Falten gelegt. Die Falten hatten eine Höhe von ca. 3 mm und eine Breite (in Plattenebene der Brennstoffzelle gesehen) von ca. 2 mm. Dieser plissierte Träger 1 wurde einer Rekristallisationsglühung bei 1250 °C unterworfen. Der Träger 1 wurde nun gebeizt und galvanisch mit einer 2 µm dicken Au-Schicht versehen. Dann wurde das Ganze während 10 h bei 800 °C geglüht und nach dem Abkühlen mit einer Filzwalze, die mit einer Au-Paste bestrichen war, mit Au-Partikeln von max. 3 µm Durchmesser belegt. Dabei blieb die Paste lediglich an den oberen und unteren Kanten der Falten des Metallgewebes hängen. Das Ganze wurde nun bei 300 °C getrocknet während 10 h in O₂-Atmosphäre bei 800 °C geglüht, auf Raumtemperatur abgekühlt und erneut mit dem abrollenden Filz beschichtet und wieder geglüht. Dieser Prozess wurde 3 Mal wiederholt. Die auf diese Weise hergestellte Deckschicht bestand aus einer mehr oder weniger zusammenhängenden Füllschicht 9 aus elektrisch leitenden Cr₂O₃, in welche die aus einzelnen diskreten Au-Partikeln bestehende Edelmetall-Oberflä-

chenschicht 7 eingebettet war. Die gesamte Schicht erreichte eine Dicke von ca. 30 $\mu$m.

Bei der Messung wurden ausgezeichnete Resultate bezüglich Leitfähigkeit in der kombinierten $Cr_2O_3$/Au-Schicht und Uebergangswiderstand gegenüber einer Pt-Sonde erzielt. Bei einer virtuellen Stromdichte von 0,5 A/cm² (Projektion senkrecht auf die Plattenebene der elektrochemischen Zelle) betrug der Spannungsabfall in der $Cr_2O_3$/Au-Schicht selbst nur ca. 1,5 mV, derjenige am Uebergang zur Pt-Sonde 3 mV. Das bedeutet praktisch nur 0,5 % der totalen Zellenspannung bei Leerlauf und weniger als 1 % der Zellenspannung bei Vollast.

Ausführungsbeispiel 5:

Siehe Fig. 3, rechte Seite!
Aus der Legierung MA 754 wurde aus feinem Draht ein 1,5 mm dickes Vlies hergestellt, das als Stromkollektor diente. Das Vlies war quadratisch und hatte eine Fläche von 100 cm². Nach dem Zuschneiden wurde das Vlies im Vakuum während 1/2 h bei 1280 °C zwecks Rekristallisation geglüht. Dann wurde das Vlies auf beiden Seiten mit einer Pt/Rh-Legierung dernachfolgenden Zusammensetzung beschichtet:
Pt = 90 Gew.-%
Rh = 10 Gew.-%

Zu diesem Zweck wurde zunächst eine Pt/Rh-Legierung erschmolzen und zu Pulver von max. 2 $\mu$m Partikeldurchmesser verarbeitet. Mit Hilfe eines Lösungsmittels und eines organischen Binders wurde eine vergleichsweise dünnflüssige Paste angerührt und damit eine mit Löschpapier bekleidete zylindrische Rolle getränkt. Die Beschichtung erfolgte durch mehrmaliges Abrollen der Rolle, Trocknen bei 300 °C, Glühen bei 900 °C zwecks Formierung der $Cr_2O_3$-Füllschicht und schlussendliches Glühen bei 1200 °C während 100 h. Auf diese Weise wurde eine Deckschicht von total 15 $\mu$m Dicke gebildet, die aus einer aus leitendem $Cr_2O_3$ bestehenden, als Einbettungsmatrix dienenden Füllschicht 9 und aus einem darin eingelagerten lockeren Gerüst 8 von Edelmetallpartikeln aufgebaut war.

Die Messung ergab annähernd die gleichen Werte für die Leitfähigkeiten bzw. Uebergangswiderstände wie unter Beispiel 4 angegeben. Dank der zahlreichen Berührungspunkte des Vlieses mit der ebenen Pt-Sonde war hier die Stromkonzentration pro Berührungspunkt sehr niedrig (geschätzt ca. 1 mA).

Die Erfindung ist nicht auf die Ausführungsbeispiele beschränkt.

Der Stromkollektor zur Stromleitung zwischen benachbarten flachen, ebenen, stapelförmig angeordneten keramischen Hochtemperatur-Brennstoffzellen mit Feststoffelektrolyt auf der Basis von dotiertem, stabilisiertem Zirkonoxyd, wobei jeweils die Sauerstoffelektrode der einen Brennstoffzelle mit der Brennstoffelektrode der nächstfolgenden Brennstoffzelle elektrisch leitend verbunden und der zwischen den Elektroden liegende Zwischenraum durch eine gasdichte, elektrisch leitende Trennplatte in zwei, die unterschiedlichen gasförmigen Medien Brennstoff und Sauerstoffträger führenden Räume unterteilt ist, besteht ganz allgemein aus einem die geometrische Form bestimmenden Träger 1 aus einer elektrisch leitenden oxydationsbeständigen, oxyddispersionsgehärteten Nickelbasis-Superlegierung mit einem hohen Cr-Gehalt und sehr niedrigem Al- und Ti-Gehalt, wobei folgende Zusammensetzungsgrenzen einzuhalten sind:
Cr ≧ 20 Gew.-%
C ≦ 0,1 Gew.-%
Al ≦ 0,5 Gew.-%
Ti ≦ 0,8 Gew.-%,
ferner aus einer nur an den Kontaktstellen vorhandenen porösen oder dichten Oberflächenschicht 2 aus einem Edelmetall ausgewählt aus Au oder einem Pt-Metall oder einer Legierung aus mindestens zweien dieser Metalle und einer zusammenhängenden oder nicht zusammenhängenden, zwischen Träger 1 und Oberflächenschicht 2 vorliegenden Zwischenschicht 3 und/oder die Poren der Oberflächenschicht ausfüllenden Füllschicht aus elektrisch halbleitendem, gleichzeitig als Oxydationsschutz und als Diffusionssperre wirkenden $Cr_2O_3$, dergestalt, dass die $Cr_2O_3$-Partikel fest sowohl mit dem Trägerwerkstoff wie mit den Edelmetall-Partikeln als auch unter sich elektrisch leitend verbunden sind.

In einer ersten Art ist die aus Edelmetall bestehende Oberflächenschicht 2 an den Kontaktstellen vollkommen zusammenhängend und dicht in einer Dicke von 5 bis 100 $\mu$m und das darunterliegende $Cr_2O_3$ in Form einer zusammenhängenden Zwischenschicht 3 von 1 bis 20 $\mu$m Dicke vorhanden.

In einer zweiten Art ist die aus Edelmetall bestehende Oberflächenschicht 5 an den Kontaktstellen teilweise zusammenhängend und porös in einer Dicke von 5 bis 150 $\mu$m und das darunterliegende $Cr_2O_3$ in Form einer zusammenhängenden Zwischenschicht 3 von 1 bis 20 $\mu$m Dicke vorhanden.

In einer weiteren Ausführung ist die aus Edelmetall bestehende Oberflächenschicht 5 bzw. 6 an den Kontaktstellen nur teilweise zusammenhängend und besteht aus einzelnen Partikeln oder Partikelaggregaten mit Kanten und Spitzen in einer Dicke von 20 bis 250 $\mu$m, wobei das darunter und zwischen den Edelmetallpartikeln liegende $Cr_2O_3$ in Form einer ganz oder nur teilweise zusammenhängenden Zwischenschicht 3 oder Füllschicht 9 von 5 bis 200 μm Dicke vorliegt.

Die aus Edelmetall aufgebaute Oberflächenschicht besteht an den Kontaktstellen vorzugsweise aus diskreten kantigen Partikeln 7 oder aus einem lockeren Skelett kantiger Partikel und das $Cr_2O_3$ ist als Füllschicht 9 gleicher Dicke zwischen den Edelmetall-Partikeln eingebettet, dergestalt, dass ein Ueberzug mit gleichmässiger Verteilung Edelmetall/$Cr_2O_3$ gebildet wird.

Der Träger besteht in vorteilhafter Weise aus einer oxyddispersionsgehärteten Nickelbasis-Superlegierung der nachfolgenden Zusammensetzung:

Cr = 20 - 25 Gew.-%
C = 0,03 - 0,1 Gew.-%
Fe = 0 - 5 Gew.-%
Co = 0 - 15 Gew.-%
Al = 0 - 0,3 Gew.-%
Ti = 0 - 0,5 Gew.-%
Si = 0 - 0,3 Gew.-%
$Y_2O_3$ = 0,5 - 1,5 Gew.-%
Ni = Rest.

Insbesondere zeichnet sich der Träger 1 durch die nachfolgende Zusammensetzung aus:

Cr = 20 Gew.-%
C = 0,05 Gew.-%
Al = 0,3 Gew.-%
Ti = 0,5 Gew.-%
Fe = 1 Gew.-%
$Y_2O_3$ = 0,6 Gew.-%
Ni = Rest.

Der Stromkollektor hat die Form eines Kontaktfingers oder eines gewellten Bandes oder Drahtes oder eines Drahtwendels oder eines Metallgewebes oder eines Vlieses, wobei lediglich die den Elektroden und/oder der Trennplatte am nächsten liegenden Stellen und Erhebungen mit einem Edelmetall und $Cr_2O_3$ enthaltenden Ueberzug versehen sind.

Das Verfahren zur Herstellung eines Stromkollektors wird durchgeführt, indem zunächst aus der oxyddispersionsgehärteten Nickelbasis-Superlegierung durch thermo-mechanische Behandlung oder mechanische Bearbeitung aus geeignetem Vormaterial in Form von Blech, Band oder Draht ein Träger 1 gefertigt und die Kontaktstellen durch Bepinseln, Bestreichen, Abrollen eines getränkten Filzes oder teilweises Eintauchen mit einer Paste oder Suspension von Edelmetallpulver in Binde- und Lösungsmittel oberflächlich beschichtet und das Ganze getrocknet und einem Sinterprozess bei 0,7 - 0,8 der absoluten Schmelztemperatur des Edelmetalls in inerter Atmosphäre oder Vakuum unterworfen und an schliessend bei 800 bis 1100 °C in oxydierender Atmosphäre während mindestens 24 h geglüht wird.

In spezieller Weise wird das Verfahren zur Herstellung eines Stromkollektors durchgeführt, indem zunächst aus der oxyddispersionsgehärteten Nickelbasis-Superlegierung durch thermo-mechanische Behandlung oder mechanische Bearbeitung aus geeignetem Vormaterial in Form von Blech, Band oder Draht ein Träger 1 gefertigt und die Kontaktstellen elektrochemisch oberflächlich beschichtet und das Ganze getrocknet und bei 800 bis 1100 °C in oxydierender Atmosphäre während mindestens 24 h geglüht wird.

**Ansprüche**

1. Stromkollektor zur Stromleitung zwischen benachbarten flachen, ebenen, stapelförmig angeordneten keramischen Hochtemperatur-Brennstoffzellen mit Feststoffelektrolyt auf der Basis von dotiertem, stabilisiertem Zirkonoxyd, wobei jeweils die Sauerstoffelektrode der einen Brennstoffzelle mit der Brennstoffelektrode der nächstfolgenden Brennstoffzelle elektrisch leitend verbunden und der zwischen den Elektroden liegende Zwischenraum durch eine gasdichte, elektrisch leitende Trennplatte in zwei, die unterschiedlichen gasförmigen Medien Brennstoff und Sauerstoffträger führenden Räume unterteilt ist, dadurch gekennzeichnet, dass er aus einem die geometrische Form bestimmenden Träger (1) aus einer elektrisch leitenden oxydationsbeständigen, oxyddispersionsgehärteten Nickelbasis-Superlegierung mit einem hohen Cr-Gehalt und sehr niedrigem Al- und Ti-Gehalt, wobei folgende Zusammensetzungsgrenzen einzuhalten sind:
Cr ≧ 20 Gew.-%
C ≦ 0,1 Gew.-%
Al ≦ 0,5 Gew.-%
Ti ≦ 0,8 Gew.-%,
ferner aus einer nur an den Kontaktstellen vorhandenen porösen oder dichten Oberflächenschicht (2) aus einem Edelmetall ausgewählt aus Au oder einem Pt-Metall oder einer Legierung aus mindestens zweien dieser Metalle und einer zusammenhängenden oder nicht zusammenhängenden, zwischen Träger (1) und Oberflächenschicht (2) vorliegenden Zwischenschicht (3) und/oder die Poren der Oberflächenschicht ausfüllenden Füllschicht (9) aus elektrisch halbleitendem, gleichzeitig als Oxydationsschutz und als Diffusionssperre wirkenden $Cr_2O_3$ besteht, dergestalt, dass die $Cr_2O_3$-Partikel fest sowohl mit dem Trägerwerkstoff wie mit den Edelmetall-Partikeln als auch unter sich elektrisch leitend verbunden sind.

2. Stromkollektor nach Anspruch 1, dadurch gekennzeichnet, dass die aus Edelmetall bestehende Oberflächenschicht (2) an den Kontaktstellen vollkommen zusammenhängend und dicht in einer Dicke von 5 bis 100 μm und das darunterliegende $Cr_2O_3$ in Form einer zusammenhängenden Zwischenschicht (3) von 1 bis 20 $\mu$m Dicke vorliegt.

3. Stromkollektor nach Anspruch 1, dadurch gekennzeichnet, dass die aus Edelmetall bestehende Oberflächenschicht (5) an den Kontaktstellen teilweise zusammenhängend und porös in einer Dicke von 5 bis 150 $\mu$m und das darunterliegende $Cr_2O_3$ in Form einer zusammenhängenden Zwischenschicht (3) von 1 bis 20 $\mu$m Dicke vorliegt.

4. Stromkollektor nach Anspruch 1, dadurch gekennzeichnet, dass die aus Edelmetall bestehende Oberflächenschicht (5; 6) an den Kontaktstellen nur teilweise zusammenhängend und aus einzelnen Partikeln oder Partikelaggregaten mit Kanten und Spitzen in einer Dicke von 20 bis 250 $\mu$m bestehend und das darunter und zwischen den Edelmetallpartikeln liegende $Cr_2O_3$ in Form einer ganz oder nur teilweise zusammenhängenden Zwischenschicht (3) oder Füllschicht (9) von 5 bis 200 $\mu$m Dicke vorliegt.

5. Stromkollektor nach Anspruch 1, dadurch gekennzeichnet, dass die aus Edelmetall bestehende Oberflächenschicht an den Kontaktstellen aus diskreten kantigen Partikeln (7) oder aus einem lockeren Skelett kantiger Partikel (8) besteht und das $Cr_2O_3$ als Füllschicht (9) gleicher Dicke zwischen den Edelmetall-Partikeln eingebettet ist, dergestalt, dass ein Ueberzug mit gleichmässiger Verteilung Edelmetall/$Cr_2O_3$ gebildet wird.

6. Stromkollektor nach eindem der vorangegangenen Ansprüche, dadurch gekennzeichnet, dass der Träger (1) aus einer oxyddispersionsgehärteten Nickelbasis-Superlegierung der nachfolgenden Zusammensetzung besteht:

Cr = 20 - 25 Gew.-%
C = 0,03 - 0,1 Gew.-%
Fe = 0 - 5 Gew.-%
Co = 0 - 15 Gew.-%
Al = 0 - 0,3 Gew.-%
Ti = 0 - 0,5 Gew.-%
Si = 0 - 0,3 Gew.-%
$Y_2O_3$ = 0,5 - 1,5 Gew.-%
Ni = Rest.

7. Stromkollektor nach Anspruch 6, dadurch gekennzeichnet, dass der Träger (1) die nachfolgende Zusammensetzung aufweist:

Cr = 20 Gew.-%
C = 0,05 Gew.-%
Al = 0,3 Gew.-%
Ti = 0,5 Gew.-%
Fe = 1 Gew.-%
$Y_2O_3$ = 0,6 Gew.-%
Ni = Rest.

8. Stromkollektor nach Anspruch 1, dadurch gekennzeichnet, dass er die Form eines Kontaktfingers oder eines gewellten Bandes oder Drahtes oder eines Drahtwendels oder eines Metallgewebes oder eines Vlieses hat und dass lediglich die den Elektroden und/oder der Trennplatte am nächsten liegenden Stellen und Erhebungen mit einem Edelmetall und $Cr_2O_3$ enthaltenden Ueberzug versehen sind.

9. Verfahren zur Herstellung eines Stromkollektors nach Anspruch 1, dadurch gekennzeichnet, dass zunächst aus der oxyddispersionsgehärteten Nickelbasis-Superlegierung durch thermo-mechanische Behandlung oder mechanische Bearbeitung aus geeignetem Vormaterial in Form von Blech, Band oder Draht ein Träger (1) gefertigt und die Kontaktstellen durch Bepinseln, Bestreichen, Abrollen eines getränkten Filzes oder teilweises Eintauchen mit einer Paste oder Suspension von Edelmetallpulver in Binde- und Lösungsmittel oberflächlich beschichtet und das Ganze getrocknet und einem Sinterprozess bei 0,7 - 0,8 der absoluten Schmelztemperatur des Edelmetalls in inerter Atmosphäre oder Vakuum unterworfen und anschliessend bei 800 bis 1100 °C in oxydierender Atmosphäre während mindestens 24 h geglüht wird.

10. Verfahren zur Herstellung eines Stromkollektors nach Anspruch 1, dadurch gekennzeichnet, dass zunächst aus der oxyddispersionsgehärteten Nickelbasis-Superlegierung durch thermo-mechanische Behandlung oder mechanische Bearbeitung aus geeignetem Vormaterial in Form von Blech, Band oder Draht ein Träger (1) gefertigt und die Kontaktstellen elektrochemisch oberflächlich beschichtet und das Ganze getrocknet und bei 800 bis 1100 °C in oxydierender Atmosphäre während mindestens 24 h geglüht wird.

FIG.1

FIG.2

FIG.3

**Europäisches Patentamt**

# EUROPÄISCHER RECHERCHENBERICHT

Nummer der Anmeldung

## EP 90 11 5052

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 606 762 (M. HSU)(20-11-1986) — — — | | H 01 M 8/02 // B 32 B 15/01 |
| A | US-A-3 516 865 (C.S. TEDMON)(23-06-1970) — — — | | |
| A | US-A-3 300 344 (D.T. BRAY et al.)(24-01-1967) — — — — — | | |

| | RECHERCHIERTE SACHGEBIETE (Int. Cl.5) |
|---|---|
| | H 01 M |

Der vorliegende Recherchenbericht wurde für alle Patentansprüche erstellt

| Recherchenort | Abschlußdatum der Recherche | Prüfer |
|---|---|---|
| Den Haag | 21 Dezember 90 | D'HONDT J.W. |